(19) Europäisches Patentamt
European Patent Office
Office européen des brevets

(11) Publication number: **0 074 345 A1**

(12) **EUROPEAN PATENT APPLICATION**

(21) Application number: 82870047.6

(22) Date of filing: 31.08.82

(51) Int. Cl.³: C 08 L 71/04
C 08 L 25/00

(30) Priority: 08.09.81 US 299686

(43) Date of publication of application: 16.03.83 Bulletin 83/11

(84) Designated Contracting States: AT BE CH DE FR GB IT LI LU NL SE

(71) Applicant: FMC Corporation
2000 Market Street
Philadelphia Pennsylvania 19103(US)

(72) Inventor: Braksmayer, Diza Pearl
89 Rocky Brook Road
Cranbury New Jersey 08512(US)

(74) Representative: Plucker, Guy et al,
OFFICE KIRKPATRICK 4 Square de Meeûs
B-1040 Bruxelles(BE)

(54) **Flame retardant polyphenylene ether-styrene thermoplastic resin compositions.**

(57) A flame retardant polyphenylene ether-styrene resin composition having a UL-94 rating of V-1 or better, a heat distortion temperature greater than 87°C and a melt viscosity at 200°C of less than 2,000 poise is obtained by incorporating with said polyphenylene ether-styrene resin composition from 3 to 6 parts by weight of a triaryl phosphate and from about 2-1/2 to about 5 parts by weight of a 3-hydroxyalkyl phosphine oxide having the formula:

$$(HOCH_2\overset{\overset{R_1}{|}}{C}HCH_2)_{3-n}\overset{\overset{O}{\|}}{P}(R_2)n$$

wherein $R_1$ may be the same or a different radical selected from the group consisting of hydrogen and the methyl radicals, $R_2$ is a radical of 4 to 8 carbon atoms and n is either zero or one.

EP 0 074 345 A1

# FLAME RETARDANT POLYPHENYLENE ETHER-STYRENE THERMOPLASTIC RESIN COMPOSITIONS

The present invention relates to thermoplastic polyphenylene ether-styrene polymers which are rendered flame retardant by having incorporated therewith effective amounts of a triaryl phosphate and a 3-hydroxyalkyl phosphine oxide.

The polyphenylene ethers are known and described in numerous publications including U.S. Patent Nos. 3,306,874 and 3,306,875 of Allan S. Hay and U.S. Patent Nos. 3,257,357 and 3,257,358 of Gelu Stoeff Stamatoff. The high molecular weight polymers are high performance engineering thermoplastics possessing relatively high melt viscosities and softening points -- that is, in excess of 275°C, and are useful for many commercial applications requiring high temperature resistance including formation of film, fiber and molded articles.

The combination of polyphenylene oxide ethers with polystyrene and modified polystyrene is also known and described in U.S. Patent No. 3,385,435. The preferred polystyrenes are the high impact polystyrenes such as the styrene-acrylonitrile copolymers and styrene-acrylonitrile-butadiene copolymers. Such compositions are referred to in this specification and in the claims as "polyphenylene ether-styrene resin compositions".

Other polyphenylene ether resin compositions that find wide use as an engineering thermoplastic are the graft copolymer compositions containing 30 to 90 weight percent of a graft copolymer of polyphenylene ether with a styrene-type compound and 10 to 70 weight percent of a styrene-type compound polymer having a number average molecular weight in the range of 50,000 to 200,000. Graft copolymers that are free from polyphenylene ether homopolymers may be prepared as described in U.S. Patent No. 3,929,930 by polymerizing 20 to 200 parts by weight of a styrene-type compound at a temperature in the range of from 130°C to 200°C in the presence of 100 parts by weight of a polyphenylene ether and 0.1 to 15 parts by weight of a radical initiator. The number average polymerization degree of the polyphenylene ether used is in the range from 50 to 300, preferably from 60 to 280 and more preferably from 70 to 250.

Such graft copolymers are known for their excellent moldability and are high performance engineering thermoplastics. Said graft copolymers are useful in many commercial applications requiring high temperature resistance including formation of film, fiber and molded articles.

The combination of (1) such graft copolymers of polyphenylene oxide ethers with (2) styrene-type compound polymers is also known and described in U.S. Patent No. 3,929,931. The preferred polystyrenes are the high impact polystyrenes such as the styrene-acrylonitrile copolymers and styrene-acrylonitrile-butadiene copolymers.

In general, compositions containing from 30 to 90 percent by weight of the polyphenylene oxide graft copolymer and from 10 to 70 percent by weight of a styrene-type compound polymer having a number average molecular weight in the range from 50,000 to 200,000 exhibit the best overall combination of properties and these compositions are preferred. These compositions are also referred to in this specification and in the claims as "polyphenylene ether-styrene resin compositions". Such polyphenylene oxide graft copolymer-styrene compositions may also be rendered flame retardant by having incorporated therewith effective amounts of a triaryl phosphate and a 3-hydroxyalkyl phosphine oxide.

With the current and future federal requirements obligating automotive manufacturers to improve the efficiency of their product and reduce fuel consumption, there is a substantial growth in the use of engineering plastics as a replacement for metal to achieve weight reduction. The use of polyphenylene ether-styrene compositions in the transportation, electrical/ electronic and appliance categories accounts for a majority of its volume, and polyphenylene ether-styrene compositions are the dominant engineering thermoplastic in appliance use. Such compositions are in general, characterized as being relatively stable thermally upon long exposure to processing temperatures and shear. Upon exposure to flame, however, they burn quite readily as would be anticipated from their relative high styrene content. There is a substantial and increasing demand for flame retardant polyphenylene ether-styrene resin compositions.

To improve flame retardant characteristics, polyphenylene ether-styrene resin compositions have been compounded with flame retardant additives, that is, aromatic halogen compounds plus aromatic phosphates as described in U.S. Patent No. 3,639,506. A preferred composition in accordance with that teaching comprises from 20% to 80% by weight of poly(2,6-dimethyl-1,4-phenylene) ether, 20% to 80% by weight of a high impact polystyrene (styrene modified with rubber) and from 3 to 25 parts by weight per 100 parts by weight of the polyphenylene ether-styrene composition of a flame retardant combination of 1 part triphenyl phosphate and 3 to 4 parts of a heavily chlorinated biphenyl. U.S. Patent No. 4,154,775 states that cyclic phosphates are, by themselves, an effective, non-plasticizing flame retardant additive for polyphenylene oxide compositions. Such additives, however, frequently degrade or cause degradation under processing conditions (extrusion at about 250°C) resulting in poor mechanical performance of the thermoplastic polyphenylene oxide compositions themselves. One problem is that the heat distortion temperature of the polyphenylene ether-styrene resin composition is lowered by a flame retardant.

The known flame retardants for polyphenylene ether-styrene compositions suffer generally from one or more deficiencies including low compatibility, low thermal stability, also low heat distortion temperature and/or poor fire retardant behavior in molded polyphenylene oxide-styrene resin compositions. Additionally, a serious problem posed by aromatic halogen flame retardants in polyphenylene oxide compositions is attributable to acid formation, either due to or arising from light exposure or thermal degradation with the released acid then attacking metal components in end-use applications. Some aromatic halogen compounds are contraindicated as fire retardant additives due to toxicity problems of the compound, that is, mutagenicity.

The present invention provides compositions containing a triaryl phosphate and a 3-hydroxyalkyl phosphine oxide having the formula:

$$(HOCH_2\overset{R_1}{\overset{|}{C}}HCH_2)_{3-n}\overset{O}{\overset{\|}{P}}(R_2)_n$$

wherein $R_1$ may be the same or a different radical selected from the group consisting of hydrogen and the methyl radicals, $R_2$ is an alkyl radical of 4 to 8 carbon atoms and n is either zero or one which is an excellent flame retardant and when present in polyphenylene ether-styrene resin composition in effective amounts affords the advantage of resistance to burning and improved melt viscosity without appreciably lowering the heat distortion temperature of the resin. The addition of the aryl phosphate and 3-hydroxyalkyl phosphine oxide to the polyphenylene ether-styrene composition in the amount required to improve flame retardant properties does not adversely modify the physical properties of the polyphenylene oxide composition to a point where its commercial use is impaired. The blend of 3-hydroxyalkyl phosphine oxide

and triaryl phosphate is readily compatible with the polyphenylene ether-styrene resin compositions and effective when added in small quantities, that is, from about 3 to about 6 parts per hundred of triaryl phosphate and from about 2-1/2 to about 5 parts per hundred of phosphine oxide. Particularly preferred compositions are flame retardant polyphenylene ether-styrene compositions to which have been added from about 4 to about 5 parts per hundred of triaryl phosphate and about 3 to about 4 parts per hundred of a 3-hydroxyalkyl phosphine oxide.

In accordance with the present invention, a polyphenylene ether-styrene resin composition containing about 30 weight percent of a polyphenylene ether and about 70 weight percent of a polystyrene is rendered flame retardant by having incorporated with about 100 parts thereof from about 3 to about 6 parts by weight of a triaryl phosphate and from about 2-1/2 to about 5 parts by weight of a 3-hydroxyalkyl phosphine oxide having the formula:

$$(HOCH_2\overset{R_1}{\overset{|}{C}}HCH_2)_{3-n}\overset{O}{\overset{\|}{P}}(R_2)_n$$

wherein $R_1$ may be the same or a different radical selected from the group consisting of hydrogen and the methyl radicals, $R_2$ is a radical of 4 to 8 carbon atoms and n is either zero or one. The resulting polyphenylene ether-styrene composition has a UL-94 rating of V-1 or better, a heat distortion temperature greater than about 87°C and a melt viscosity at 260°C less than about 2,000 poise. The UL-94 rating when referred to throughout the specification and claims is determined on a specimen 1.588 mm (1/16") thick.

The flame resistant polyphenylene ether-styrene compositions having incorporated therein the aryl phosphate and 3-hydroxyalkyl phosphine oxide in accordance with the present invention are particularly advantageous for use in appliances, business machines, terminal

strips, connectors and blocks.

The merits that may be attributed to the aryl phosphate and 3-hydroxyalkyl phosphine oxide mixture (relative to conventional flame retardant agents in present use) include no corrosion, non-toxicity and minimal adverse change in the physical properties of the polymer. The heat distortion temperature of the polyphenylene ether-styrene composition is not appreciably affected by the addition thereto of 3-6 parts per hundred of a triaryl phosphate and 2-1/2 to 5 parts per hundred of a phosphine oxide flame retardant. Particularly advantageous in combination with a triaryl phosphate are the alkyl bis(3-hydroxyalkyl) phosphine oxides such as butyl bis(3-hydroxypropyl) phosphine oxide which is compatible with polyphenylene ether-polystyrene resins and has improved mixing parameters that reduce polymer degradation by lowering the processing temperature (lower melt viscosity). Also useful as flame retardant additives are mixtures of a triaryl phosphate with the tris(3-hydroxyalkyl) phosphine oxides such as tris(3-hydroxypropyl) phosphine oxide, tris(2-methyl-3-hydroxypropyl) phosphine oxide and mixtures of the same.

3-Hydroxyalkyl phosphine oxides may be prepared by first reacting a 3-hydroxy-1,2-unsaturated olefin such as allyl alcohol with phosphine in the presence of a free radical catalyst as described in U.S. Patent No. 3,489,811. The use of stoichiometric quantities of reactants (or as little as 4% excess alcohol) reduces the formation of higher molecular weight by-products. The 3-hydroxyalkyl phosphine obtained by this process is readily converted to the corresponding phosphine oxide by oxidation with hydrogen peroxide.

An example of phosphine oxide useful with a triaryl phosphate as fire retardant additives in polyphenylene ether-styrene compositions is the tris(3-hydroxypropyl) phosphine oxide, derived from allyl

alcohol. Tris(3-hydroxy-2-methylpropyl) phosphine oxide, derived from methallyl alcohol may also be used as a fire retardant additive but is more volatile.

Phosphine oxides having different 3-hydroxyalkyl groups on the phosphorus atom such as:

$$(HOCH_2\overset{CH_3}{\overset{|}{C}}HCH_2)_n\overset{O}{\overset{\|}{P}}-(CH_2CH_2CH_2OH)_{3-n}$$

wherein n is either 1 or 2, may be prepared by reacting phosphine with a mixture of allyl and methallyl alcohol and oxidizing the resulting product. Such mixed phosphine oxides are more volatile than the tris(3-hydroxypropyl) phosphine oxide. The relative volatility of this series of compounds (rate of vaporization by thermogravimetric technique) in order of increasing volatility is tris(3-hydroxypropyl) phosphine oxide, bis(3-hydroxypropyl) 2-methyl-3-hydroxypropyl phosphine oxide, tris-(2-methyl-3-hydroxypropyl) phosphine oxide and 3-hydroxypropyl bis(2-methyl-3-hydroxypropyl) phosphine oxide. These mixed phosphine oxides as well as physical mixtures of such mixed phosphine oxides with tris(3-hydroxypropyl) phosphine oxide and/or tris(2-methyl-3-hydroxypropyl) phosphine oxide are useful additives in combination with a triaryl phosphate in preparing flame retardant polyphenylene ether-styrene resin compositions.

The triaryl phosphate that is incorporated with the 3-hydroxyalkyl phosphine oxide in the polyphenylene oxide-styrene composition of the present invention may be a triaryl phosphate such as mesityl phosphate, tricresyl phosphate, trixylenyl phosphate, or cresyl diphenyl phosphate. It is preferred, however, that the triaryl phosphate be a mixed isopropylphenyl/phenyl phosphate mixed ester composition prepared by the method described in U.S. Patent No. 3,576,923 from a synthetic alkylate. The molecular weight of the triaryl phosphate may vary from about 340 (cresyl diphenyl phosphate) to about 390. When an isopropylphenyl/phenyl

phosphate is present in the composition, the ratio of the moles of isopropyl radicals to phosphorus atoms present in the triaryl phosphate is between about 1:1 and about 1.5:1.

The following examples will more fully illustrate the invention.

EXAMPLE I

Preparation of Tris(3-Hydroxypropyl) Phosphine Oxide

Into a one liter pressure reactor is placed 307 g (5.3 moles) allyl alcohol and 20 ml of a solution containing 3 g azobisisobutyronitrile dissolved in 100 ml of allyl alcohol. The pressure reactor is closed and charged with 36 g (1.06 moles) of phosphine. The reaction mixture is agitated by rocking the reactor for two hours at 80°C. The reaction mixture is permitted to cool to room temperature and the pressure vessel is vented in a hood to release any unreacted phosphine. An additional 20 ml of the azobisisobutyronitrile solution described above is added to the reactor which is closed and the system is again heated to 80°C and rocked for one hour. The addition of 20 ml of the azobisisobutyronitrile solution is repeated with intermediate agitation at 80°C for one hour under pressure until all of the azobisisobutyronitrile solution (100 ml) has been added. The contents of the reactor are then heated to 80°C under pressure and rocked for an additional five hours.

The yellow solution that results from the above reaction is vacuum distilled by heating to about 85°C/133 Pa (1 mm Hg) and maintaining at that temperature and pressure for about four hours to remove volatiles [mono-, and bis(3-hydroxypropyl) phosphine] and unreacted allyl alcohol. The residue remaining in the distillation pot is a clear yellow syrup weighing 184 g.

This non-volatile yellow syrup is dissolved in an equal volume of a 50:50 mixture of isopropanol/methanol and oxidized by stirring with the dropwise addition

of a 30% aqueous hydrogen peroxide solution diluted with an equal volume of isopropanol. When the exothermic reaction subsides, the solution of phosphine oxide is tested by adding one drop of the solution to 1 ml of carbon disulfide until no red coloration can be detected visually in the carbon disulfide layer. This indicates complete oxidation of the phosphine to tris-(3-hydroxypropyl) phosphine oxide.

Following oxidation with hydrogen peroxide, the solvents (water, isopropanol and methanol) are removed from the reaction product by heating to 65°C under vacuum. The viscous yellow slush which remains is filtered through a Buchner Funnel to collect 42.4 grams of a white solid that is insoluble in isopropanol at room temperature. The yield, based on the phosphine used is 17.8%. After washing with isopropanol and air drying, the white solid analyses for tris(3-hydroxypropyl) phosphine oxide.

| Found | Theory |
|---|---|
| C=48.29% | C=48.21% |
| H=9.28% | H=9.38% |
| P=13.3% | P=13.84% |

In a similar manner, 2-methyl-3-hydroxypropyl bis-(3-hydroxypropyl) phosphine oxide may be prepared by reacting one mole of methallyl alcohol and two moles of allyl alcohol with phosphine and oxidizing with hydrogen peroxide. Four pph of this compound and 4 pph of a triaryl phosphate when incorporated with a polyphenylene oxide-styrene thermoplastic resin composition containing 30 weight percent polyphenylene ether and 70 weight percent high impact polystyrene results in a UL-94 rating of V-1, a heat distortion temperature greater than 87°C and a melt viscosity at 260°C less than 2,000 poise.

## EXAMPLE II

*n*-Butyl-bis(3-Hydroxypropyl) Phosphine Oxide

Into a four liter stainless steel pressure reactor is placed 0.5 g azobisisobutyronitrile dissolved in 600 ml of toluene. The reactor is purged with nitrogen and charged with 112 g (2.0 moles) of butene and 102 g (3.0 moles, 50% excess) phosphine. The reaction mixture is heated and stirred at 85°C-90°C for one hour and maintained at that temperature with stirring while five 20 ml portions of azobisisobutyronitrile solution (5.5 g in 350 ml of toluene) are added at 20 minute intervals over 1 hour 40 minutes. No exotherm is noted during the catalyst addition and the pressure reading dropped from 1.432 MPa (190 psig) (at the time of the first 20 ml catalyst addition) to 1.397 MPa (185 psig) (20 minutes after the last catalyst addition).

The excess phosphine is vented from the reaction vessel and 278 g (4.8 moles, 20% excess) of allyl alcohol and 40 ml of the azobisisobutyronitrile catalyst solution is added to the reaction vessel. No exotherm is observed and heating is continued at 85°C-90°C with stirring and addition of 20 ml of azobisisobutyronitrile every 20 minutes until all of the catalyst solution (350 ml) has been added. The temperature is maintained with stirring at 85°C-90°C for 11 hours. A clear yellow liquid is removed from the reactor and heated to 110°C/133 Pa (1 mm Hg) to distill off the volatile materials. The residue is a clear yellow liquid weighing 290.9 grams. This residue is dissolved in an equal volume of isopropanol and oxidized with 30% hydrogen peroxide dissolved in an equal volume of isopropanol as described above in Example I to give 308.2 g of a viscous yellow liquid (after removal of water and isopropanol) containing a small amount of a white suspended solid. The mixture is diluted with chloroform, filtered to remove the white solid, and

the chloroform is evaporated to give a clear yellow liquid. The analyses of this liquid product is:

| Found (%) | Calculated for n-butyl bis(3-hydroxypropyl) phosphine oxide (%) |
|---|---|
| C=54.50, 54.40 | 54.05 |
| H=10.21, 10.21 | 10.36 |
| P=13.28, 13.65 | 13.96 |

Three pph of this compound and 5 pph of a triaryl phosphate when incorporated with a polyphenylene oxide-styrene resin composition containing 30 weight percent polyphenylene ether and 70 weight percent high impact polystyrene results in a UL-94 rating of V-1, a heat distortion temperature greater than 87°C and a melt viscosity at 260°C less than 2,000 poise.

## EXAMPLE III

### Preparation of Tris(3-Hydroxy-2-Methylpropyl) Phosphine Oxide

Tris(3-hydroxy-2-methylpropyl) phosphine is prepared by the method described in Example I above.

Into a four liter pressure reactor equipped with a stirrer and thermometer is placed 690 g (9.6 moles) of methallyl alcohol and 40 ml of a solution containing 9 g azobisisobutyronitrile dissolved in 200 ml of toluene. The pressure reactor is closed and charged with 96 g (2.8 moles) of phosphine. The reaction mixture is heated with stirring to 60°C at which temperature the reaction becomes exothermic and the temperature rises to 107°C. Stirring is continued as the temperature subsides from 107°C to 90°C and the pressure drops from 803.2 KPa to 349 KPa (100 psig to 50 psig). The temperature is maintained at 90°C with heating and stirring for one hour at which time 50 ml of the azobisisobutyronitrile solution in toluene is pumped into the reactor. The reaction mixture is maintained at 90°C for one hour with stirring after the second addition of catalyst. The addition of 50 ml of the azobisisobutyronitrile solution is repeated with continuous stirring at 90°C each hour until all of the azobisisobutyronitrile solution (200 ml) has been added. The contents of the reactor are then stirred while maintaining the temperature at 90°C for an additional four hours. After the last addition of catalyst solution, the pressure in the reaction vessel has dropped to atmosphere pressure.

The reaction mixture is cooled to room temperature, removed from the reaction vessel and heated up to 35°C at 266.6 Pa (2 mm Hg) to distill off the volatile components (toluene, methallyl alcohol, mono- and bis- addition products).

The non-volatile colorless liquid residue tris-(3-hydroxy-2-methylpropyl) phosphine weighs 614.7 g. It is dissolved in an equal volume of isopropanol and chilled on ice. The phosphine present in solution is oxidized by the dropwise addition with stirring of a 30% aqueous hydrogen peroxide solution diluted with an equal volume of isopropanol. Inasmuch as the oxidation reaction is exothermic, the course of the reaction may be followed by the temperature increase upon addition of hydrogen peroxide. When the exotherm subsides, a small aliquot of the reaction mixture is tested after each addition of hydrogen peroxide with hydrogen peroxide test paper and by addition of a few drops of the reaction mixture to 1 ml of carbon disulfide. At the end of the oxidation reaction, the observed red color of the carbon disulfide indicative of unoxidized phosphine, disappears and the hydrogen peroxide test paper indicates the presence of hydrogen peroxide.

When the oxidation of the phosphine to phosphine oxide has been completed, the water and isopropanol are removed from the phosphine oxide by heating to 65°C under vacuum until all volatiles have distilled off. The residue, a clear colorless viscous liquid,

weighs 633.5 g and has the following analyses:

| Found (%) | Theory (%) |
|---|---|
| C=54.59 | C=54.14 |
| H=9.35 | H=10.15 |
| P=11.1 | P=11.65 |

The "theory" values are calculated for tris(3-hydroxy-2-methylpropyl) phosphine oxide.

Three pph of this compound and 5 pph of a triaryl phosphate when incorporated with a polyphenylene oxide-styrene resin composition containing 30 weight percent polyphenylene ether and 70 weight percent high impact polystyrene results in a UL-94 rating of V-1, a heat distortion temperature greater than 87°C and a melt viscosity at 260°C less than 2,000 poise.

## EXAMPLE IV

s-Butyl bis(3-Hydroxypropyl) Phosphine Oxide

Into a 4 liter stainless steel pressure reactor is placed 224 g (4 moles) of mixed 2-butene, 600 ml of toluene, 204 g (6.0 moles, 50% excess) of phosphine and 25 ml of a solution of 4 g azobisisobutyronitrile in 100 ml of toluene. The reaction vessel is heated and stirred at 85°C to 90°C for one hour and the remaining azobisisobutyronitrile solution is added in 25 ml portions every 30 minutes until the 100 ml of catalyst solution is used up. The reaction mixture is heated and stirred at 90°C for 4 hours after the last addition of catalyst solution and then allowed to cool overnight.

The phosphine is vented from the reaction vessel and 487 g (8.4 moles, 5% excess) allyl alcohol is added together with 50 ml of a solution of 8 g azobisisobutyronitrile in 20 ml of toluene. The reaction mixture is heated with stirring at 90°C with the addition of 50 ml azobisisobutyronitrile catalyst solution every 30 minutes until all 200 ml of solution has been added. Heating and stirring are continued at 90°C for 4 hours and the reaction vessel is then allowed to cool to

room temperature. The liquid from the reaction vessel is heated to 130°C/200 Pa (130°C/1.5 mm Hg) to remove volatile components. The residual product is a greenish liquid weighing 519.3 g.

The residual product is believed to contain both s-butyl bis(3-hydroxypropyl) phosphine and 3-hydroxypropyl di-s-butyl phosphine. It is dissolved in an equal volume of isopropanol and oxidized with 30% hydrogen peroxide in an equal volume of isopropanol as described above in Example I until a negative carbon disulfide reading is obtained. The solution of oxidized phosphine is concentrated under reduced pressure to yield a syrupy yellow liquid weighing 555.6 g (99.2% yield on oxidation or a yield of 62.5% based on the starting butene).

This product has the following analyses:

| Found (%) | Calculated for s-butyl bis(3-hydroxypropyl) phosphine oxide (%) |
|---|---|
| C=51.80, 52.06 | 54.05 |
| H=8.72, 8.94 | 10.36 |
| P=13.79 | 13.96 |

The fire retardant effect of 3 pph of this compound and 5 pph of isopropylphenyl/phenyl phosphate when incorporated with a polyphenylene oxide-styrene thermoplastic resin composition is described below in Example VII.

## EXAMPLE V

### Isopropylphenyl/phenyl Phosphate

Phenol was alkylated by the method described in U.S. Patent No. 3,576,923 to give an alkylate containing 60 weight percent phenol, 27 weight percent 2-isopropyl phenol, 11 weight percent 3- and 4-isopropylphenol, 0.2 weight percent 2,6-diisopropyl phenol and 1.6 weight percent 2,4-diisopropyl phenol. This alkylate was then reacted with phosphorus oxychloride

in accordance with U.S. Patent No. 3,576,923 to give an isopropylphenyl/phenyl phosphate ester having a molecular weight of 369 and containing one isopropyl radical per molecule (ratio of isopropyl substituents: phosphorus atoms is 1:1).

This mixed phosphate ester may be used with a phosphine oxide as a flame retardant additive for polyphenylene ether-styrene resin compositions in the practice of the present invention.

## EXAMPLE VI

### Isopropylphenyl/phenyl Phosphate

By the procedure described above in Example V an isopropylphenyl/phenyl phosphate was prepared having a molecular weight of 390 and a ratio of isopropyl substituents to phosphorus of 1.5:1.

This mixed phosphate ester may be used with a phosphine oxide as a flame retardant additive.

## EXAMPLE VII

### Effect of Isopropylphenyl/phenyl Phosphate and *s*-Butyl bis(3-Hydroxypropyl) Phosphine Oxide Blend As A Flame Retardant For Polyphenylene Ether-Styrene Resin Compositions

Three parts by weight of *s*-butyl bis(3-hydroxypropyl) phosphine oxide prepared as described in Example IV and 5 parts by weight of isopropylphenyl/phenyl phosphate having a molecular weight of 369 prepared as described in Example V are added to 100 parts by weight of a polyphenylene ether-styrene thermoplastic resin composition containing 30% by weight polyphenylene oxide and 70% by weight high impact polystyrene and dispersed through the resin. Mixing of the additive and resin is accomplished in a Haake mixer (HAAKE RHEOMIX MODEL 600 with REOCORD EU10 attachment, manufactured by Haake Inc., 244 Saddle River Road, Saddle Brook, New Jersey 07662). The mixing takes place at 220°C. The Underwriter Laboratories rating (Vertical Burn Test) for this polyphenylene ether-styrene thermoplastic resin composition was marginal V-O but solid V-1.

In testing the polyphenylene ether-styrene composition containing the flame retardant additives, the flame retardant properties are determined following procedures established by the Underwriter Laboratories Bulletin No. 94, STANDARD FOR TESTS FOR FLAMMABILITY OF PLASTIC MATERIALS FOR PARTS IN DEVICES AND APPLIANCES; Second Edition, Second Impression (as revised to February 1, 1974) dated July 30, 1976. Tests were run on 1.588 mm (1/16 inch) specimens and the Vertical Burn Test for classifying Materials 94 V-O and 94 V-1 is described in Section 3 of this publication. In this test, the V-O rating indicates the best flame resistance and the V-1 rating indicates less flame resistance.

The flame retardant polyphenylene ether-styrene composition of this Example had a heat distortion temperature of 93°C and a simultaneous drop in the melt viscosity at 260°C to 1,220 poise was obtained.

CLAIMS:

1. A polyphenylene ether-styrene resin composition containing 30 weight percent of a polyphenylene ether and 70 weight percent of a polystyrene, said polyphenylene ether-styrene resin composition characterized by being rendered flame retardant by having incorporated with each 100 parts thereof from 3 to 6 parts by weight of a triaryl phosphate and from 2-1/2 to 5 parts by weight of a 3-hydroxyalkyl phosphine oxide having the formula:

$$(HOCH_2\overset{R_1}{\overset{|}{C}}HCH_2)_{3-n}\overset{O}{\overset{\|}{P}}(R_2)_n$$

characterized in that $R_1$ may be the same or a different radical selected from the group consisting of hydrogen and the methyl radicals, $R_2$ is a radical of 4 to 8 carbon atoms and n is either zero or one; and said polyphenylene ether-styrene resin having a UL-94 rating of V-1 or better, a heat distortion temperature greater than 87°C and a melt viscosity at 260°C less than 2,000 poise.

2. The polyphenylene ether-styrene resin composition of claim 1 characterized in that said polystyrene is a high impact polystyrene.

3. The polyphenylene ether-styrene resin composition of claim 1 characterized in that said triaryl phosphate is isopropylphenyl/phenyl phosphate.

4. The polyphenylene ether-styrene resin composition of claim 3 characterized in that the isopropylphenyl/phenyl phosphate has a molecular weight of 369.

5. The polyphenylene ether-styrene resin composition of claim 3 characterized in that said isopropylphenyl/phenyl phosphate has a molecular weight of 390.

6. The polyphenylene ether-styrene resin composition of claim 1 characterized in that said triaryl phosphate is tricresyl phosphate.

7. The polyphenylene ether-styrene resin composition of claim 1 characterized in that the triaryl phosphate is cresyl diphenyl phosphate.

8. The polyphenylene ether-styrene resin composition of claim 1 characterized in that the triaryl phosphate is trixylyl phosphate.

9. The polyphenylene ether-styrene resin composition of claim 1 characterized in that the 3-hydroxyalkyl phosphine oxide is tris(3-hydroxypropyl)phosphine oxide.

10. The polyphenylene ether-styrene resin composition of claim 1 characterized in that the 3-hydroxyalkyl phosphine oxide is tris(2-methyl-3-hydroxypropyl)phosphine oxide.

11. The polyphenylene ether-styrene resin composition of claim 1 characterized in that the 3-hydroxyalkyl phosphine oxide is n-butyl bis(3-hydroxypropyl)phosphine oxide.

12. The polyphenylene ether-styrene resin composition of claim 1 characterized in that the 3-hydroxyalkyl phosphine oxide is s-butyl bis(3-hydroxypropyl)phosphine oxide.

13. The polyphenylene ether-styrene resin composition of claim 2 characterized by having incorporated therewith 5 parts by weight of isopropylphenyl/phenyl phosphate.

14. The polyphenylene ether-styrene resin composition of claim 13 characterized in that said isopropylphenyl/phenyl phosphate has a molecular weight of 369.

15. The polyphenylene ether-styrene resin composition of claim 14 characterized by having incorporated therewith 3 parts by weight of s-butyl bis(2-hydroxypropyl)phosphine oxide.

European Patent Office

# EUROPEAN SEARCH REPORT

0074345

Application number

EP 82 87 0047

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | --- US-A-4 287 119 (D.P.BRAKSMAYER et al.) *Claims* ----- | 1 | C 08 L 71/04<br>C 08 L 25/00 |
| | | | **TECHNICAL FIELDS SEARCHED (Int. Cl. 3)** |
| | | | C 08 L 71/04<br>C 08 L 25/00<br>C 08 K 5/53 |

The present search report has been drawn up for all claims

| Place of search | Date of completion of the search | Examiner |
|---|---|---|
| THE HAGUE | 07-12-1982 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82